# EUROPÄISCHE PATENTSCHRIFT

(11) **EP 2 649 208 B1**
(45) Veröffentlichungstag und Bekanntmachung des Hinweises auf die Patenterteilung: **04.07.2018**
(21) Anmeldenummer: 11813759.5
(22) Anmeldetag: 14.10.2011
(51) Int. Cl.: C21C 5/46, C21C 5/52, F27B 3/20, F27B 3/22, F27D 1/16, F27D 99/00

(54) **LANZE FÜR EINE SCHMELZGEFÄSSANLAGE ODER EIN METALLURGISCHES REAKTIONSGEFÄSS**
LANCE FOR A FURNACE CRUCIBLE SYSTEM OR A METALLURGICAL REACTION VESSEL
LANCE POUR INSTALLATION À CUVE DE FUSION OU POUR CUVE DE RÉACTION MÉTALLURGIQUE

(30) Priorität: 06.12.2010 DE 102010053647
(43) Veröffentlichungstag der Anmeldung: 16.10.2013
(73) Patentinhaber: SMS group GmbH, 40237 Düsseldorf (DE)
(72) Erfinder: SÖNTGEN, Thomas, 46499 Hamminkeln (DE); BEST, Rolf, 45966 Gladbeck (DE); WISSEN, Christoph, 47259 Duisburg (DE); SCHEWE, Dietmar, 46145 Oberhausen (DE)
(74) Vertreter: Klüppel, Walter
(86) Internationale Anmeldenummer: PCT/DE2011/001885
(87) Internationale Veröffentlichungsnummer: WO 2012/075980

(56) Entgegenhaltungen:
- GB-A- 1 323 448
- JP-A- 4 124 213
- US-A- 5 932 169

## Beschreibung

Die Erfindung betrifft eine Lanze für eine Schmelzgefäßanlage oder ein metallurgisches Reaktionsgefäß, die mit einer das Anhaften von geschmolzenem Metall oder von Schlacke verhindernden oder zumindest minimierenden Beschichtung versehen ist.

Bei der Stahlerzeugung werden Schmelzgefäße oder Reaktionsgefäße eingesetzt, bei denen mittels einer in das Gefäß einführbaren Lanze beispielsweise Sauerstoff eingeblasen werden kann, um einen Frischvorgang auszuführen.

Beim Frischen kommt es dann häufig zu Turbulenzen, die dazu führen, dass das flüssige Metall oder die flüssige Schlacke gegen den Außenmantel der Lanze spritzen, dort erstarren und somit ständig anwachsende Anbackungen oder Anhaftungen bilden.

Dies kann auch zu Beeinträchtigungen der am Kopf der Lanze angeordneten Düsen führen, so dass sich deren Geometrie verändert. Dies kann wiederum die Produktionszeit und/oder den Sauerstoffverbrauch negativ beeinflussen.

Es ist bekannt, auf eine Lanze, die für metallurgische Prozesse eingesetzt wird, feuerfeste Beschichtungen in mehreren Lagen aufzubringen, beispielsweise durch Besprühen mit einem gegen Hitze isolierenden Material, um deren Lebensdauer zu verlängern (GB 1323448A, JP 4 124213A, US 5932169A). Anbackungen oder Anhaftungen an der Lanze können hierdurch allerdings nicht vermieden werden.

Aufgabe der Erfindung ist es daher, derartige Anbackungen oder Anhaftungen an der Lanze selbst und an deren Kopf zu minimieren oder möglichst ganz zu vermeiden.

Gelöst wir diese Aufgabe erfindungsgemäß mit einer Lanze für eine Schmelzgefäßanlage oder ein metallurgisches Reaktionsgefäß, deren Lanzenschaft und Lanzenkopf mit einer einlagig durch Besprühen aufgebrachten, das Anhaften von geschmolzenem Metall oder von Schlacke verhindernden oder zumindest minimierenden Beschichtung versehen ist, wozu der Lanze eine diese ringförmig umgebende Auftrageinrichtung zum Auftragen der Beschichtung zugeordnet ist, durch die die Lanze beim Ein- und Ausfahren hindurchführbar ist, wobei die Beschichtung Titanborid, Titan(di)oxid, Silizium(di)oxid oder Siliziumnitrid enthält.

Eine derartige Beschichtung verhindert das Anbacken oder Anhaften von Schlackenspritzern oder Metallspritzern erheblich.

Verfahrenstechnisch einfach ist es, wenn die Beschichtung durch Besprühen aufgebracht worden ist, wobei dies üblicherweise einlagig erfolgt. Durch im Laufe des Einsatzes mehrfache Beschichtung kann sich aber auch eine Mehrlagenschicht aufbauen.

Die Schicht ist aufgebaut wie eine Layerschicht, so dass, wenn es zum Anhaften von Schlacke oder Stahl kommt, die Schicht sich unter dem Gewicht ablöst.

Zur Vermeidung von Verschmutzungen der am Kopf der Lanze vorgesehenen Düsen ist auch die Beschichtung des Lanzenkopfes vorteilhaft.

Wie eingangs erwähnt wird die Lanze für die Behandlung der Schmelze in das metallurgische Gefäß eingefahren.

Um die Beschichtung schnell und gleichmäßig aufzubringen, ist vorgesehen, dass der Lanze eine diese ringförmig umgebende Auftrageinrichtung zum Auftragen der Beschichtung zugeordnet ist, durch die die Lanze beim Ein- und Ausfahren hindurchführbar ist.

Vorzugsweise weist die Auftrageinrichtung auf die Lanze gerichtete Sprühdüsen zum Auftragen der Beschichtung auf.

Konstruktiv ähnlich ist auch die Einrichtung zum Reinigen der Lanze auszubilden, d. h. die auf der Beschichtung möglicherweise befindlichen Anbackungen oder Anhaftungen sind mit einer mit Hochdruckdüsen versehenen Abstreifeinrichtung, die die Lanze ringförmig umgibt und durch die die Lanze hindurchfahrbar ist, entfernbar, wobei deren Düsen unter einem spitzen Winkel zur Längsachse der Lanze ausgerichtet sind, vorzugsweise unter einem spitzen Winkel zur Ausfahrrichtung der Lanze.

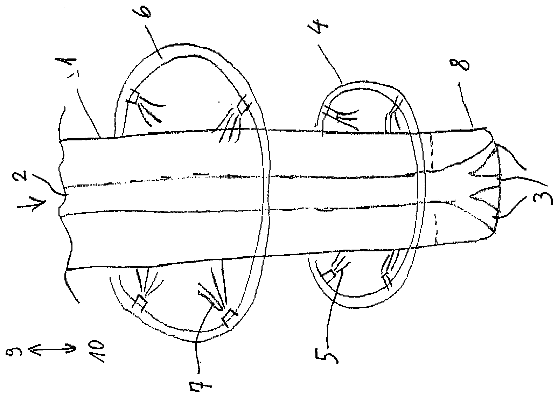

Die Erfindung soll nachfolgend unter Bezug auf die Zeichnung erläutert werden, wobei diese eine schematische Darstellung eines Teiles der Lanze zeigt, mit der Auftrag- und der Abstreifeinrichtung.

Nicht dargestellt ist in der Zeichnung sowohl das metallurgische Gefäß, in das die Lanze für den Behandlungsprozess des Metalls einfahrbar ist, noch Details der Lanze selbst, wie deren Aufhängung oder Halterung oder die Zuführung von beispielsweise Sauerstoff.

Die Lanze selbst ist mit 1 und der Lanzenkopf mit 8 bezeichnet.

Mit 2 ist der mittige Durchtrittskanal bezeichnet, durch den beispielsweise Sauerstoff zu den Düsen 3 im Lanzenkopf 8 geleitet werden kann.

Sowohl die Auftrageinrichtung 6 für die Beschichtung, wie auch die Abstreifeinrichtung 4 sind ringförmig ausgebildet, so dass die Lanze 1 durch diese hindurch ein- bzw. ausfahrbar ist (Einfahrrichtung 10, Ausziehrichtung 9).

Selbstverständlich werden beide Einrichtungen an entsprechenden Vorrichtungen gehaltene, wobei sie in die Bewegungsrichtung der Lanze einfahrbar oder einschwenkbar sein können.

Mit 5 sind die Düsen an der Abstreifeinrichtung 4 bezeichnet, die vorzugsweise entgegen der Ausziehrichtung der Lanze, die mit 9 bezeichnet ist, ausgerichtet sind, und zwar im spitzen Winkel.

## Patentansprüche

1. Lanze für eine Schmelzgefäßanlage oder ein metallurgisches Reaktionsgefäß, deren Lanzenschaft und Lanzenkopf mit einer einlagig durch Besprühen aufgebrachten, das Anhaften von geschmolzenem Metall oder von Schlacke verhindernden oder zumindest minimierenden Beschichtung versehen ist, wozu der Lanze eine diese ringförmig umgebende Auftrageinrichtung zum Auftragen der Beschichtung zugeordnet ist, durch die die Lanze beim Ein- und Ausfahren hindurchführbar ist, wobei die Beschichtung Titanborid, Titan(di)oxid, Silizium(di)oxid oder Siliziumnitrid enthält.

2. Lanze nach Anspruch 1 ,
**dadurch gekennzeichnet,**
**dass** die Auftrageinrichtung auf die Lanze gerichtete Sprühdüsen zum Auftragen der Beschichtung aufweist.

3. Lanze nach Anspruch 2,
**dadurch gekennzeichnet,**
**dass** die Lanze von einer mit Hochdruckdüsen versehenen Abstreifeinrichtung umgeben ist, deren Düsen unter einem spitzen Winkel zur Längsachse der Lanze ausgerichtet sind.

4. Lanze nach einem der vorstehenden Ansprüche,
**dadurch gekennzeichnet,**
**dass** die Düsen unter einem spitzen Winkel zur Ausziehrichtung der Lanze ausgerichtet sind.

## Claims

1. Lance for a melting vessel installation or a metallurgical reaction vessel, the lance shank and lance head of which are provided with a single-layer coating applied by spraying and preventing or at least minimising adhesion of molten metal or slag, for which purpose an application device for application of the coating is associated with the lance and annularly surrounds this, the lance being guidable through the device during movement in and movement out, wherein the coating contains titanium boride, titanium (di)oxide, silicon (di)oxide or silicon nitride.

2. Lance according to claim 1, **characterised in that** the application device has spray nozzles, which are directed towards the lance, for application of the coating.

3. Lance according to claim 2, **characterised in that** the lance is surrounded by a stripper device which is provided with high-pressure nozzles and the nozzles of which are oriented at an acute angle with respect to the longitudinal axis of the lance.

4. Lance according to any one of the preceding claims, **characterised in that** the nozzles are oriented at an acute angle with respect to the output direction of the lance.

## Revendications

1. Lance pour une installation de cuve de fusion ou pour une cuve de réaction métallurgique, la tige de la lance et la tête de la lance étant munies d'une enduction appliquée en une seule couche par pulvérisation, empêchant ou au minimum minimisant l'adhérence du métal en fusion ou du laitier, un mécanisme d'application l'entourant à la manière d'un anneau étant attribué à cet effet à la lance pour l'application de l'enduction, à travers lequel la lance peut se déplacer lors de son entrée et lors de sa sortie, l'enduction contenant du borure de titane, du dioxyde/de l'oxyde de titane, du dioxyde/de l'oxyde de silicium ou du nitrure de silicium.

2. Lance selon la revendication 1, **caractérisée en ce que** le mécanisme d'application présente des buses de pulvérisation orientées sur la lance, pour l'application de l'enduction.

3. Lance selon la revendication 2, **caractérisée en ce que** la lance est entourée par un mécanisme de raclage muni de buses travaillant sous haute pression, dont les buses sont orientées en formant un angle aigu par rapport à l'axe longitudinal de la lance.

4. Lance selon l'une quelconque des revendications précédentes, **caractérisée en ce que** les buses sont orientées en formant un angle aigu par rapport à la direction de retrait de la lance.
